# EUROPÄISCHE PATENTSCHRIFT

(11) **EP 1 992 265 B1**
(45) Veröffentlichungstag und Bekanntmachung des Hinweises auf die Patenterteilung: **08.12.2010**
(21) Anmeldenummer: 07018203.5
(22) Anmeldetag: 17.09.2007
(51) Int. Cl.: A47J 37/07

(54) **Brennstoffeinheit**
Fuel unit
Unité de combustible

(30) Priorität: 18.05.2007 DE 202007007223 U; 19.07.2007 DE 202007010162 U
(43) Veröffentlichungstag der Anmeldung: 19.11.2008
(73) Patentinhaber: GFM Ingenieur- und Produktionstechnik GmbH, 45721 Haltern am See (DE)
(72) Erfinder: Gawarecki, Herbert, 45721 Haltern am See (DE); Gawarecki, Jan, 45721 Haltern am See (DE)
(74) Vertreter: Gesthuysen, von Rohr & Eggert

(56) Entgegenhaltungen:
- EP-A- 0 271 467
- FR-A- 2 566 647
- US-A- 2 963 352
- US-A- 3 575 156
- US-A- 4 627 854
- US-A- 4 762 525

## Beschreibung

Die Erfindung betrifft eine Brennstoffeinheit mit einer brennbaren Hülle und einem brennbaren Brennstoffinhalt, wobei der Brennstoffinhalt aus mehreren brennbaren Komponenten besteht, wenigstens eine erste Komponente leicht entflammbar ist, wenigstens eine zweite Komponente schwerer entflammbar ist und im entzündeten Zustand als eine Hitze- und Glutquelle mit hoher Brenndauer dient.

Brennstoffeinheiten der in Rede stehenden Art sind seit längerem bekannt und dienen in der Regel dazu, die Inbetriebnahme eines Grills oder eines Kamins zu vereinfachen. Die Vereinfachung besteht bei den bekannten Brennstoffeinheiten üblicherweise darin, daß ein Gemisch aus einer leicht entflammbaren Komponente (Anzünder) und einer schwerer entflammbaren Komponente, die dafür aber eine höhere Brenndauer als der Anzünder aufweist und typischerweise aus Holzkohle oder Briketts besteht, verwendungsbereit abgepackt ist. Dadurch muß der Grill- oder Kaminnutzer nicht mehr selbst eine verwendungsfähige Mischung von leicht- und schwerentflammbaren Komponenten herstellen, sondern er muß lediglich für die richtige Plazierung der Brennstoffeinheit und das Entzünden der Brennstoffeinheit sorgen.

Aus der DE 298 00 258 U1 ist beispielsweise eine Anordnung zur Erzeugung einer Grillkohlenglut bekannt, bei der ein Gemisch aus Holzkohle und Anzündern in einem brennbaren Karton angeordnet ist, wobei die Anzünder nach Einbringen von Löchern in den Karton entzündet werden können. Nachteilig ist hier, daß das Behältnis zunächst geöffnet werden muß, um die Anordnung entzünden zu können, wodurch wiederum die Gefahr einer ungewollten Verschmutzung des Anwenders verbunden ist.

Aus der DE 32 48 158 A1 ist ein Einmal-Grillset bekannt, bei dem ein Hüllbeutel aus einer brennbaren Folie ein Gemisch aus Holzkohle und Grillanzündern umschließt, wobei diese Anordnung durch Entzünden des Hüllbeutels insgesamt entzündet wird. Nachteilig ist bei dieser Anordnung, wie bei allen Anordnungen, deren Brennstoffinhalt im wesentlichen nur aus einer ersten, leicht entflammbaren Komponente und einer zweiten, schwerer entflammbaren Komponente mit dafür hoher Brenndauer besteht, daß verhältnismäßig viele Anteile der leicht entflammbaren ersten Komponente verwendet werden müssen, um die zweite, schwerer entflammbare Komponente dauerhaft zu entzünden, wie beispielsweise Kohle oder Briketts.

Aus der US 4 762 525 A ist eine vorkonfektionierte Feuerbox bekannt, bei der innerhalb eines brennbaren Kartons eine Mehrzah von brennbaren Komponenten schichtförmig horizontal übereinander angeordnet sind.

Es ist daher Aufgabe der Erfindung, eine Brennstoffeinheit zur Verfügung zu stellen, die sicher entflammbar ist bei vergleichsweise geringem Einsatz von einer ersten, leicht entflammbaren Komponente.

Die zuvor hergeleitete und aufgezeigte Aufgabe ist erfindungsgemäß zunächst und im wesentlichen bei der in Rede stehenden Brennstoffeinheit durch die Merkmale des Kennzeichnenden Teils des Anspruchs 1 gelöst. Durch die Verwendung einer dritten Komponente als Bestandteil des Brennstoffinhalts, die leichter entflammbar ist als die zweite Komponente, die im entzündeten Zustand als Hitze- und Glutquelle dient, die jedoch schwerer entflammbar ist als die erste, leicht entflammbare Komponente, ist es möglich, vergleichsweise wenig Bestandteile der ersten, leicht entflammbaren Komponente zu verwenden und trotzdem eine sichere Entzündung der schwerer entflammbaren zweiten Komponente zu gewährleisten, da die erste, leicht entflammbare Komponente des Brennstoffinhalts nunmehr nur noch für die Entzündung der dritten Komponente ausreichen muß, die ja leichter entflammbar ist als die bekannte zweite Komponente des Brennstoffinhalts.

Durch die erfindungsgemäße Ausgestaltung der Brennstoffeinheit wird also gleichsam eine kleinschrittige "Entzündungs-Kaskade" realisiert, bei der die erste, leicht entflammbare Komponente im wesentlichen die Aufgabe hat, die dritte Komponente mit mittlerer Entflammbarkeit und Brenndauer zu entzünden, wobei diese dritte Komponente des Brennstoffinhalts aufgrund der höheren Brenndauer gegenüber der ersten Komponente, die zweite, schwerer entflammbare Komponente sicher entzündet. Diese "Entzündungs-Kaskade" ist in mehrerer Hinsicht vorteilhaft. Zum einen müssen nur vergleichsweise geringe Mengen der leicht entflammbaren ersten Komponente dem Brennstoffinhalt beigemischt werden, was insgesamt die potentielle Gefährlichkeit der Brennstoffeinheit senkt. Zum anderen ist es dadurch möglich, einen Teil der im Regelfall aufgrund ihrer leicht entflammbaren Bestandteile auch aus gesundheitlichen Gründen bedenklichen ersten Komponente durch weitaus unbedenklichere Stoffe zu ersetzen, die Bestandteil der dritten Komponente sind oder die dritte Komponente insgesamt ausmachen.

In einer bevorzugten Ausgestaltung der Erfindung ist die erste Komponente des Brennstoffinhalts fest oder gelartig ausgebildet, wobei die erste Komponente insbesondere Bestandteile aus Kraftstoffen, Petroleum, Paraffin, Ölen, Fetten, Wachsen und/oder Alkohol aufweist, weshalb die erste Komponente besonders leicht entflammbar ist.

In einer weiteren Ausgestaltung der Erfindung wird als zweite Komponente des Brennstoffinhalts wenigstens ein Brikett verwendet, das im Sinne dieser Erfindung schwer entflammbar ist, jedoch im entzündeten Zustand eine Hitze- und Glutquelle mit hoher Brenndauer darstellt. Das Brikett kann aus Stein-, Braun- oder Holzkohle bestehen, es kann aber auch aus anderen gemahlenen Bestandteilen mit hoher Brenndauer gepreßt sein. Die Materialauswahl für das Brikett wird üblicherweise auch abhängig gemacht werden von dem Einsatzzweck der Brennstoffeinheit. Für die Zubereitung von Speisen auf einem Grill werden bevorzugt Briketts aus gepreßter Holzkohle verwendet, zum Betrieb eines Ofens oder Kamins kann auch Stein- oder Braunkohle verwendet werden.

Als Briketts werden vorzugsweise solche Briketts mit einem Überzug verwendet, der insbesondere staubbindend ist, wie beispielsweise ein Überzug auf Wachsbasis. Der Überzug darf die Brennbarkeit der Briketts nicht negativ beeinflussen, was insbesondere bei einem dünnen Wachsüberzug nicht der Fall ist, ganz im Gegenteil erhöht eine dünne Wachsschicht sogar die Brennbarkeit. Mit einem Überzug versehene Briketts haben vor allem bei der Herstellung der erfindungsgemäßen Brennstoffeinheiten den erheblichen Vorteil, daß die für die Bestückung der Hülle der Brennstoffeinheit vorgesehene Zuführmechanik ganz erheblich gegen Verschleiß geschützt wird.

In einer besonders bevorzugten Ausgestaltung der Erfindung besteht die dritte Komponente des Brennstoffinhalts aus wenigstens einem Pellet, bevorzugt aus einer Mehrzahl von Pellets, wobei insbesondere Pellets aus gepreßtem Holz oder Papier verwendet werden.

In einer weiteren bevorzugten Ausgestaltung der Erfindung besteht die dritte Komponente des Brennstoffinhalts im wesentlichen aus Papier. Es hat sich herausgestellt, daß insbesondere Filterpapier, wie es beispielsweise von Kaffeefiltern her bekannt ist, besonders gute Brenneigenschaften hat, vor allem dann, wenn es wie anderes Papier auch in Form von gehäckseltem Papier bzw. Papierresten vorliegt.

Die Kombination von einer leicht entflammbaren ersten Komponente des Brennstoffinhalts in Zusammenhang mit Briketts, bevorzugt Holzkohlebriketts, als zweiter Komponente des Brennstoffinhalts und Papier - wie zuvor beschrieben - als dritter Komponente des Brennstoffinhalts ist besonders geeignet zum sicheren Entzünden von Holzscheiten, beispielsweise um ein Kaminfeuer in Gang zu bringen. Die vorgenannten Komponenten bilden eine ideale Entzündungs-Kaskade

In diesem Zusammenhang hat es sich ferner als vorteilhaft herausgestellt, wenn als erste Komponente getränktes Papier verwendet wird, insbesondere Papier, das vorzugsweise mit wenigstens einem von Kraftstoffen, Petroleum, Paraffin, Ölen, Fetten, Wachsen und/oder Alkohol getränkt ist.

Erfindungsgemäß werden die erste, zweite und dritte Komponente des Brennstoffinhalts mengenmäßig so aufeinander abgestimmt, daß die erste, leicht entflammbare Komponente die dritte Komponente mit mittlerer Entflammbarkeit und Brenndauer zuverlässig entzünden kann, und die entzündete dritte Komponente wiederum in der Lage ist, die zweite, schwerer entflammbare Komponente mit hoher Brenndauer, sicher zu entzünden. Die insgesamt von der Brennstoffeinheit umfaßte Menge an brennbarem Brennstoffinhalt richtet sich nach dem Verwendungszweck der Brennstoffeinheit; beispielsweise wird eine zum Zweck des Grillens eingesetzte Brennstoffeinheit vergleichsweise mehr Brennstoffinhalt umfassen als eine Brennstoffeinheit, die nur zum Entfachen eines Kaminfeuers Einsatz finden soll.

In einer Ausgestaltung der Erfindung besteht die Hülle der Brennstoffeinheit aus Papier oder Pappe. In einer besonders bevorzugten Ausgestaltung der erfindungsgemäßen Brennstoffeinheit besteht die Hülle aus Kunststoff, insbesondere nämlich aus einer Kunststoffolie, die vorzugsweise eine Verbundfolie ist, wie zum Beispiel eine Verbundfolie mit der Schichtung PE/PA/PE (PE = Polyethylen und PA = Polyamid).

Die Verwendung einer Hülle aus Kunststoffolie hat sich in einem besonders bevorzugten Ausführungsbeispiel der erfindungsgemäßen Brennstoffeinheit dann als vorteilhaft erwiesen, wenn die Hülle wenigstens eine erste, zumindest teilweise tiefgezogene Teilhülle und wenigstens eine zweite Teilhülle umfaßt, wobei die erste und die zweite Teilhülle miteinander verbunden sind und so die vollständige Hülle der Brennstoffeinheit bilden und den brennbaren Brennstoffinhalt vollständig aufnehmen. Eine solche Brennstoffeinheit ist besonders vorteilhaft und einfach herstellbar, da die in der Tiefziehform befindliche erste Teilhülle sehr einfach und kontrolliert mit dem aus mehreren Komponenten bestehenden Brennstoffinhalt befüllbar ist, da die Teilhülle eine hohe Formfestigkeit aufweist, solange sie sich in der Tiefziehform befindet und von dieser gestützt wird.

Von besonderem Vorteil sind hinsichtlich der Herstellbarkeit auch solche Brennstoffeinheiten, die als zweite, schwerer entflammbare Komponente Briketts verwenden, da diese beispielsweise im Vergleich zu Kohle eine deutlich geringere Neigung haben, zu zerfallen und zu zerbröseln, insbesondere dann, wenn sie mit einem Überzug versehen sind weshalb die brennbare Hülle mit vergleichsweise geringem Staubaufkommen mit Briketts befüllbar ist. Bei den zuvor beschriebenen mehrteiligen Hüllen werden Teilhüllen miteinander verbunden, indem sie vorzugsweise verklebt oder - soweit ungefährlich durchführbar - verschweißt werden.

Unabhängig davon, aus welchem Material die Hülle besteht, wird vorzugsweise ein solches Material gewählt, daß die Hülle im wesentlichen dampfdicht abschließt, was insbesondere für die flüchtigen Bestandteile der Komponenten des Brennstoffinhalts gilt. Vor allem die erste, leicht entflammbare Komponente neigt üblicherweise dazu, in einem gewissen Umfang auszugasen, so daß vor allem diese flüchtigen Bestandteile von der Hülle zurückgehalten werden sollen, um eine Geruchsbelästigung oder sogar Gesundheitsgefährdung auszuschließen.

In einer besonders vorteilhaften Ausgestaltung ist bei der erfindungsgemäßen Brennstoffeinheit eine Zündhilfe nach Art eines Dochtes oder einer Lunte vorgesehen, mittels derer die Brennstoffeinheit sicher entflammbar ist. Dies ermöglicht die Entzündung der Brennstoffeinheit mit einer größeren Distanz und unter einer gewissen Zeitverzögerung, die durch die Zeit definiert wird, die die Flamme der entzündeten Zündhilfe benötigt, um von dem freien, entzündeten Ende bis zu dem Ende der Zündhilfe zu gelangen, mit dem die Zündhilfe mit der Brennstoffeinheit in Kontakt steht. Dabei kann die Zündhilfe entweder von außen an der brennbaren Hülle befestigt sein, oder aber die Zündhilfe kann sogar die brennbare Hülle durchdringen. Bei solchen Hüllen, die aus mehreren Teilhüllen bestehen, hat es sich als besonders vorteilhaft herausgestellt, wenn die Zündhilfe die Teilhüllen an den Verbindungsstellen durchdringt und so ins Hülleninnere zu dem Brennstoffinhalt gelangt.

In bevorzugten Ausgestaltungen der Erfindung besteht die Zündhilfe entweder aus einem Faden oder einer Papierbahn, wobei der Faden oder die Papierbahn insbesondere wachsgetränkt sind, um die Brennbarkeit der Zündhilfe zu fördern. Wachs hat den Vorteil, daß er sich nicht aus der - zumindest teilweise immer außerhalb der Hülle der Brennstoffeinheit verlaufenden - Zündhilfe verflüchtigt und damit unwirksam wird. Vorzugsweise ist eine solche als Zündhilfe verwendete Papierbahn einfach oder mehrfach gefaltet und im zusammengefalteten Zustand außen an der Hülle der Brennstoffeinheit befestigt, so daß sie im Bedarfsfall entfaltbar ist und an dem dann freien Ende entzündbar ist.

Bei einer weiteren vorteilhaften Ausgestaltung der Erfindung ist die Zündhilfe an einer Unterseite der Brennstoffeinheit befestigt, also an der Seite der Hülle, die bei bestimmungsgemäßer Verwendung der Brennstoffeinheit dem Untergrund zugewandt ist. Es hat sich herausgestellt, daß es für das Entzünden einer erfindungsgemäß ausgestalteten Brennstoffeinheit förderlich ist, wenn die Zündhilfe an der Unterseite der Brennstoffeinheit angebracht ist, damit die im wesentlichen von unten nach oben gerichtete Ausbreitungsrichtung der Flammen die Brennstoffeinheit sicher überstreichen.

Ein weiteres, insbesondere für die Entzündung von Holzscheiten besonders vorteilhaftes Ausführungsbeispiel einer erfindungsgemäßen Brennstoffeinheit besteht in seiner zweiten Komponente nicht aus wenigstens einem Brikett, sondern aus wenigstens einem Pellet, vorzugsweise aus einem Holzpellet oder einem Papierpellet. Besonders geeignet als dritte Komponente des Brennstoffinhalts ist in diesem Zusammenhang Papier, insbesondere Filterpapier, vorzugsweise gehäckseltes Papier bzw. gehäckselte Papierabfälle.

In manchen Anwendungsfällen ist es besonders vorteilhaft, wenn die Brennstoffeinheit längserstreckt ist, wobei sie insbesondere einen dreieckigen Querschnitt aufweisen kann, also im wesentlichen nach Art eines Dreieck-Prismas geformt ist. Die so ausgestaltete Brennstoffeinheit läßt sich besonders vorteilhaft als Kaminanzünder verwenden, da sie sich sehr einfach zwischen den zu entzündenden Holzscheiten anordnen läßt. Eine einen dreieckigen Querschnitt aufweisende Hülle ist auch ohne weiteres aus einer Folie tiefziehbar.

Aus dem Stand der Technik ist im wesentlichen bekannt, die verschiedenen Komponenten des Brennstoffinhalts miteinander zu vermengen, was auf der Idee fußt, daß derart eine möglichst gleichmäßige Feuer- und letztlich Glutverteilung erzielt wird. Auch ist im Stand der Technik die Vorstellung anzutreffen, daß die erste, sehr leicht entflammbare Komponente des Brennstoffinhalts zu unterst anzuordnen ist und darüber die anderen, schwerer entflammbaren Komponenten des Brennstoffinhalts; dem liegt wohl die Vorstellung zugrunde, daß die zunächst von der ersten Komponente des Brennstoffinhalts ausgehenden Flammen derart am umfangreichsten an den weiteren Komponenten des Brennstoffinhalts entlangstreichen und diese so besonderes gut entzünden können.

Es hat sich überraschenderweise herausgestellt, daß eine besonders zuverlässige Entzündung der Brennstoffeinheit dann gegeben ist, wenn wenigstens die zweite Komponente und die dritte Komponente des Brennstoffinhalts im wesentlichen horizontal geschichtet angeordnet sind. Wenn gesagt ist, daß die Komponenten des Brennstoffinhalts "im wesentlichen" horizontal geschichtet angeordnet sind, dann ist damit gemeint, daß die durch die Komponenten gebildeten Schichten - in einsatzfähiger Anordnung der Brennstoffeinheit - übereinander angeordnet sind, wobei es auf eine im mathematischen Sinne exakte waagerechte Ausrichtung der Schichten nicht ankommt. Auch ist damit gemeint, daß die durch die Komponenten des Brennstoffinhalts gebildeten Schichten nicht im geometrisch exakten Sinne voneinander getrennt sein müssen, sondern nur so, wie es sich üblicherweise beispielsweise beim Übereinanderschütten von Schüttgütern ergibt, bei denen sich an den Schichtgrenzen Übergangszonen ausbilden.

Bei einer besonders bevorzugten Ausgestaltung der erfindungsgemäßen Brennstoffeinheit ist die zweite Komponente in einsatzfähiger Anordnung der Brennstoffeinheit unter der dritten, leichter entflammbaren Komponente angeordnet. Diese Anordnung entspricht nicht der üblichen, oben geschilderten Vorstellung der Anordnung von verschieden gut entflammbaren Komponenten eines Brennstoffinhalts, jedoch hat sich gezeigt, daß sich durch diese Anordnung deutlich bessere Ergebnisse erzielen lassen.

In Zusammenhang mit der geschichteten Anordnung wenigstens der zweiten Komponente und der dritten Komponente des Brennstoffinhalts hat es sich als vorteilhaft herausgestellt, die erste Komponente wenigstens zwischen der dritten Komponente des Brennstoffinhalts und der brennbaren Hülle der Brennstoffeinheit anzuordnen, wobei die erste Komponente nicht voll umfänglich zwischen der dritten Komponente des Brennstoffinhalts und der brennbaren Hülle erstreckt sein muß, es reicht vielmehr, wenn diese Anordnung an einer Stelle der Brennstoffeinheit vorgenommen ist, insbesondere nämlich an der Stelle, die der Entzündung der Brennstoffeinheit dient. Dabei spielt es keine Rolle, ob die Brennstoffeinheit direkt durch Entzünden der Hülle oder durch eine Zündhilfe entflammt wird.

Eine bevorzugte Ausgestaltung der erfindungsgemäßen Brennstoffeinheit, die sich insbesondere zur Entzündung von schwer entflammbaren Hölzern eignet, ist dadurch ausgezeichnet, daß eine vierte Komponente des Brennstoffinhalts vorgesehen ist, wobei die erste Komponente vorzugsweise aus getränktem Papier, die zweite Komponente vorzugsweise aus Pellets, die dritte Komponente vorzugsweise aus Papier und die vierte Komponente vorzugsweise aus Briketts besteht. Mit einer solchen Brennstoffeinheit lassen sich auch große Eichen-Holzscheite problemlos entzünden. Dem zuvor geschilderten Schichtungsprinzip der verschiedenen Komponenten folgend, ist die vierte Komponente des Brennstoffinhalts in einsatzfähiger Anordnung der Brennstoffeinheit als die unterste Schicht vorgesehen.

Im einzelnen gibt es nun eine Vielzahl von Möglichkeiten, die erfindungsgemäße Brennstoffeinheit auszugestalten und weiterzubilden. Dazu wird verwiesen einerseits auf die dem Patentanspruch 1 nachgeordneten Patentansprüche, andererseits auf die folgende Beschreibung von Ausführungsbeispielen in Verbindung mit der Zeichnung. In der Zeichnung zeigen
- Fig. 1: ein Ausführungsbeispiel einer erfindungsgemäßen Brennstoffein- heit mit einer Hülle aus Kunststoffolie,
- Fig. 2: ein Ausführungsbeispiel einer erfindungsgemäßen Brennstoff- einheit mit einer Hülle aus Pappe,
- Fig. 3: ein Ausführungsbeispiel einer erfindungsgemäßen Brennstoffein- heit mit angebrachter Zündhilfe,
- Fig.4: ein weiteres Ausführungsbeispiel einer erfindungsgemäßen Brennstoffeinheit mit angebrachter Zündhilfe,
- Fig. 5: ein weiteres Ausführungsbeispiel einer erfindungsgemäßen Brennstoffeinheit mit Zündhilfe,
- Fig. 6: ein weiteres Ausführungsbeispiel einer erfindungsgemäßen Brennstoffeinheit mit Zündhilfe,
- Fig. 7: ein weiteres Ausführungsbeispiel einer erfindungsgemäßen Brennstoffeinheit mit horizontaler Schichtung von Komponenten des Brennstoffinhalts und
- Fig.8: ein weiteres Ausführungsbeispiel einer erfindungsgemäßen Brennstoffeinheit mit vier Komponenten und einer horizontalen Schichtung.

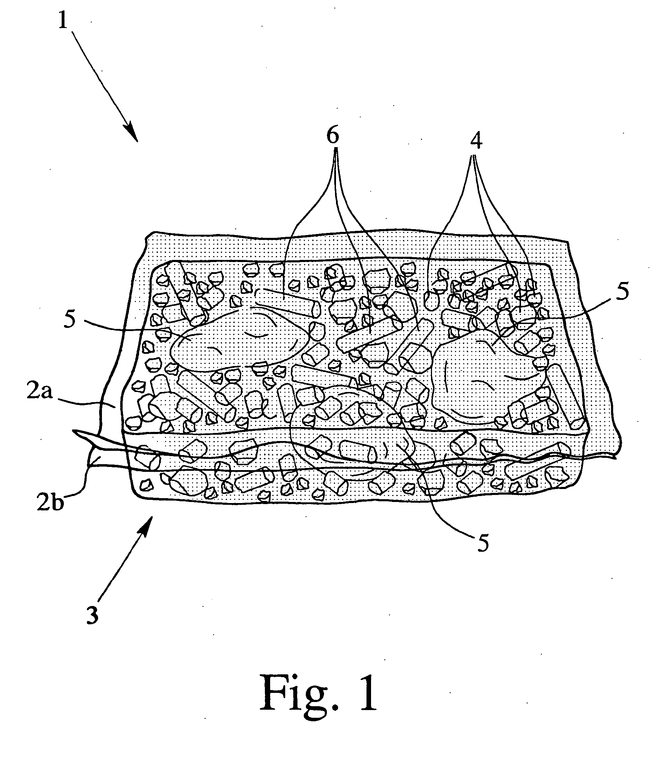

Die Fig. 1 bis 8 zeigen erfindungsgemäß ausgestaltete Brennstoffeinheiten 1 mit jeweils einer brennbaren Hülle 2 und einem brennbaren Brennstoffinhalt 3, wobei der Brennstoffinhalt 3 aus mehreren brennbaren Komponenten 4, 5, 6 besteht. Davon ist wenigstens eine erste Komponente 4 leicht entflammbar und wenigstens eine zweite Komponente 5 ist schwerer entflammbar, wobei die zweite Komponente 5 im entzündeten Zustand als eine Hitze- und Glutquelle mit hoher Brenndauer dient. Darüber hinaus umfaßt der Brennstoffinhalt 3 wenigstens eine dritte Komponente 6, die eine mittlere Entflammbarkeit und Brenndauer aufweist. Bei den in den Figuren 1 bis 6 dargestellten Ausführungsbeispielen ist die erste Komponente 4 des Brennstoffinhalts 3 ein petroleumhaltiger Feststoff. Bei anderen, hier nicht dargestellten Ausführungsbeispielen werden feste oder gelartige erste Komponenten 4 verwendet, die Bestandteile aus Kraftstoffen, Petroleum, Paraffin, Ölen, Fetten, Wachsen und/oder Alkohol aufweisen; wichtig ist lediglich, daß die erste Komponente 4 des Brennstoffinhalts 3 leicht entflammbar ist.

Allen Ausführungsbeispielen in den Fig. 1 bis 6 ist ebenfalls gemein, daß die zweite Komponente 5 des Brennstoffinhalts 3 aus wenigstens einem Brikett besteht, wobei die Briketts in den vorliegenden Fällen jeweils aus gepreßter Holzkohle bestehen. Briketts werden bei den dargestellten Brennstoffeinheiten deshalb verwendet, weil sie beispielsweise gegenüber gewöhnlicher Holzkohle sehr staubarm verarbeitbar und leicht portionierbar sind.

In den dargestellten Ausführungsbeispielen besteht die dritte Komponente 6 des Brennstoffinhalts 3 aus mehreren Pellets, wobei die dargestellten Pellets Holzpellets aus Sägeabfällen sind. Die in den dargestellten Ausführungsbeispielen verwendete Stoffauswahl für die erste Komponente 4, die zweite Komponente 5 und die dritte Komponente 6 hat sich als besonders vorteilhaft herausgestellt zur Erzeugung einer kaskadierten Entzündung der ersten Komponente 4 durch die brennbare Hülle 2, der dritten Komponente 6 durch die erste Komponente 4 und letztlich der zweiten Komponente 5 durch die dritte Komponente 6. Im vorliegenden Fall wird die leicht entflammbare, petroleumhaltige erste Komponente 4 von der brennenden Hülle 2 entzündet, woraufhin die petroleumhaltige, leicht entflammbare aber in der Regel mit einer kurzen Brenndauer versehene erste Komponente 4 die aus Pellets bestehende dritte Komponente 6 entflammt, wobei diese Pellets eine mittlere Entflammbarkeit und Brenndauer aufweisen im Vergleich zu der Entflammbarkeit und der Brenndauer der ersten Komponente 4 - dem Anzünder - und der zweiten Komponente 5, die im entzündeten Zustand als eigentliche Hitze- und Glutquelle mit hoher Brenndauer dient. Dabei ist es natürlich nicht so, daß die leicht entflammbare erste Komponente 4 nicht zum Entzünden der schwerer entflammbaren Komponente 5, also zur Entzündung der Briketts, beitrüge, jedoch dient sie hauptsächlich zur Entzündung der dritten Komponente 6 des Brennstoffinhalts 3, also zur Entzündung der Holzpellets.

In den Ausführungsbeispielen nach den Fig. 1 und 3 bis 8 besteht die Hülle 2 aus einer Kunststoffolie, nämlich einer Verbundfolie aus Polyamid (PA) und Polyethylen (PE), im vorliegenden Fall mit der Schichtung PE/PA/PE. Die in diesen Figuren dargestellte Hülle 2 weist eine erste, teilweise tiefgezogene Teilhülle 2a und eine zweite Teilhülle 2b auf, wobei die erste Teilhülle 2a und die zweite Teilhülle 2b miteinander verbunden sind und so den Brennstoffinhalt 3 als eine Gesamthülle 2 umschließen.

Eine derart ausgestaltete Hülle 2 bringt gegenüber anderen bekannten Hüllen den erheblichen Vorteil mit sich, daß die erste - zumindest teilweise - tiefgezogene Teilhülle 2a sehr einfach, schnell und kontrolliert mit dem Brennstoff inhalt 3 bzw. den Komponenten 4, 5, 6 des Brennstoffinhalts 3 befüllbar ist. Die Teilhüllen 2a, 2b sind in den dargestellten Ausführungsbeispielen miteinander verschweißt, in anderen hier nicht dargestellten Ausführungsbeispielen sind die Teilhüllen 2a, 2b miteinander verklebt.

In einem hier nicht dargestellten Ausführungsbeispiel ist die erste Komponente des Brennstoffinhalts als Belag auf der Innenseite der Hülle vorgesehen, wobei der Belag nur einen Teil der Innenseite der Hülle bedeckt. Im Falle einer mehrteilig aufgebauten Hülle ist die Komponente beispielsweise nur auf der Innenseite der ersten Teilhülle vorgesehen. In einem besonders vorteilhaften Ausführungsbeispiel ist die dritte Komponente des Brennstoffinhalts mittels der ersten Komponente an der Innenseite der Hülle fixiert. Dies wird dadurch erreicht, daß die erste Komponente als klebriger Belag auf die Innenseite der Hülle aufgebracht wird, an dem die nachfolgend aufgebrachte dritte Komponente haften bleibt. Die derart ausgestaltete Brennstoffeinheit hat den besonderen Vorteil, daß die entzündete Hülle zwangsläufig mit der ersten Komponente des Brennstoffinhalts in Berührung kommt und diese entflammt und die entzündete erste Komponente zwangsläufig die an ihr haftende dritte Komponente entzündet, die eine mittlere Entflammbarkeit und Brenndauer aufweist. Durch die beschriebene Ausgestaltung der Brennstoffeinheit wird aufgrund räumlich geschickter Anordnung der Komponenten des Brennstoffinhalts das kaskadierte Entzünden der verschiedenen Komponenten des Brennstoffinhalts gezielt unterstützt und gewährleistet.

Die in den Fig. 1 und 3 bis 6 dargestellten Ausführungsbeispiele einer Brennstoffeinheit 1 weisen eine Hülle 2 auf, die im wesentlichen dampfdicht ist, vorliegend insbesondere hinsichtlich flüchtiger Bestandteile der Komponenten des Brennstoffinhalts 3, hier also vor allem dampfdicht in bezug auf Petroleumdämpfe.

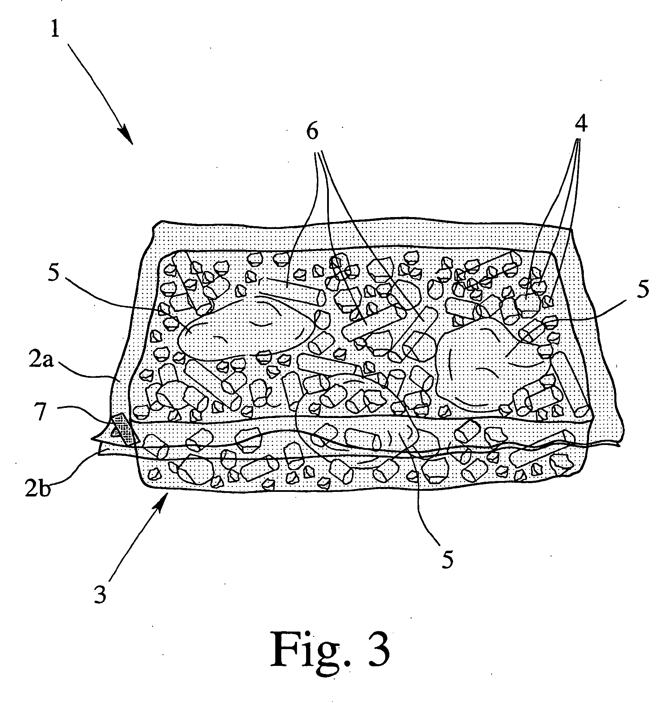

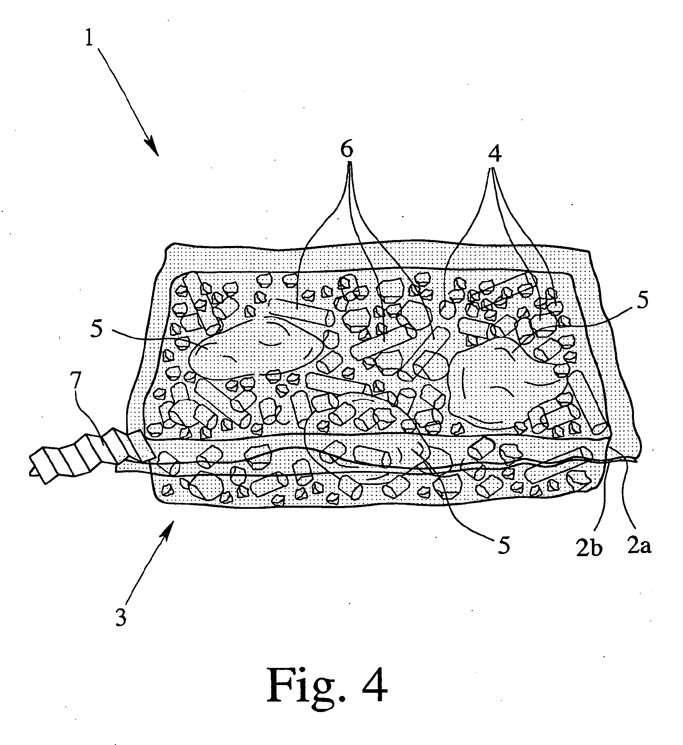

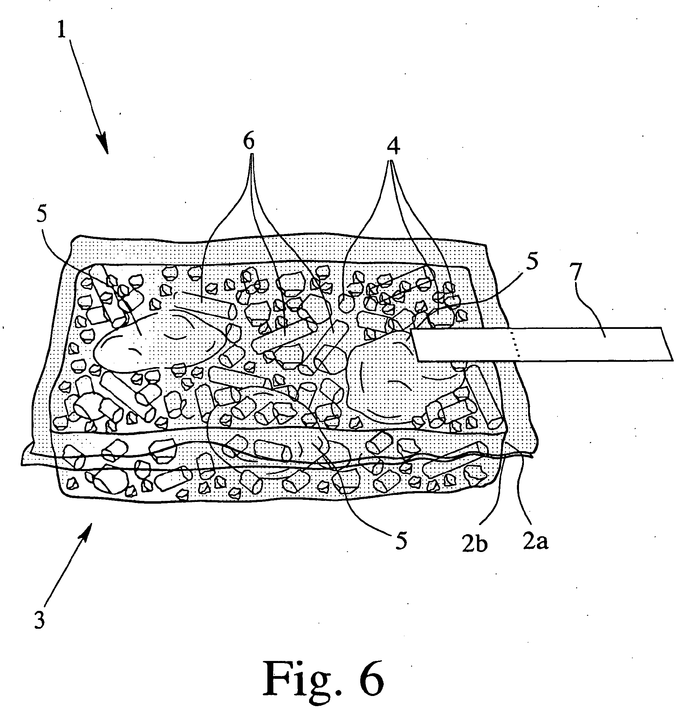

Die Brennstoffeinheiten 1 gemäß den Fig. 3 bis 6 weisen eine Zündhilfe 7 auf, mittels derer die Brennstoffeinheit sicher entflammbar ist. In den Fig. 3 und 4 besteht die Zündhilfe 7 aus einer wachsgetränkten Papierbahn, die von außen an der brennbaren Hülle 2 befestigt ist. Die Papierbahn ist mehrfach gefaltet, und der zusammengefaltete Teil ist außen an der Hülle 2 befestigt. Im Bedarfsfall, also zur Entzündung der Brennstoffeinheit 1, ist die zusammengefaltete Papierbahn entfaltbar, wie in Fig. 4 angedeutet. Bei dem in Fig. 6 dargestellten Ausführungsbeispiel besteht die Zündhilfe 7 aus einer nur einmal gefalteten Papierbahn, die eine Sollknickstelle in Nähe ihres Befestigungsortes an der Hülle 2 aufweist; die Papierbahn ist in Fig. 6 entfaltet, im entzündungsbereiten Zustand dargestellt. Im eingeklappten - also einmal gefalteten Zustand - liegt die Papierbahn insgesamt an der Hülle 2 der Brennstoffeinheit 1 an. Die in den Fig. 3, 4 und 6 in Form einer Papierbahn vorliegende Zündhilfe 7 wird dann an dem von der Brennstoffeinheit 1 abgewandten Ende entzündet, so daß sich die Flamme langsam der zu entzündenden Brennstoffeinheit 1 nähert und diese durch Übergreifen auf die Hülle 2 entzündet. In Fig. 6 besteht die Papierbahn aus Filterpapier.

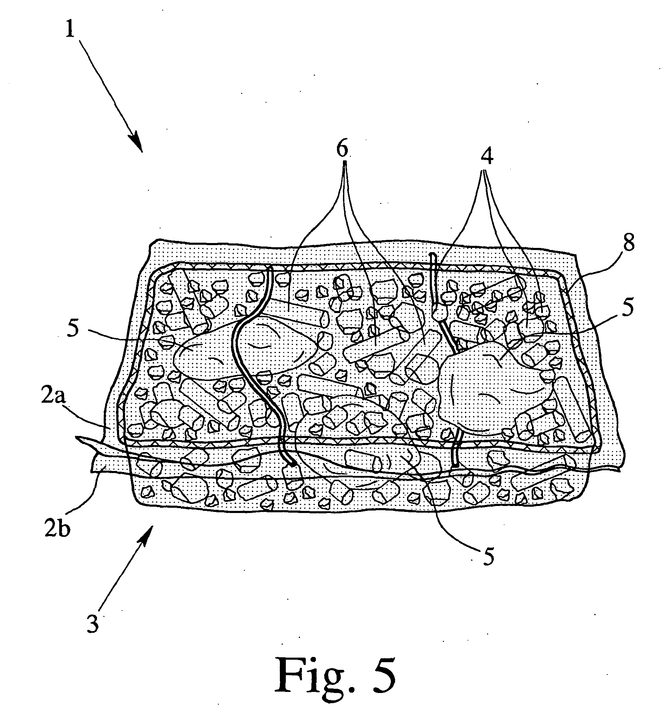

In Fig. 5 ist ein weiteres Ausführungsbeispiel dargestellt, bei dem die Zündhilfe 7 aus zwei wachsgetränkten Fäden besteht, wobei die Fäden die brennbare Hülle 2 durchdringen, im dargestellten Fall nämlich an der Verbindungsstelle 8 der Teilhüllen 2a, 2b.

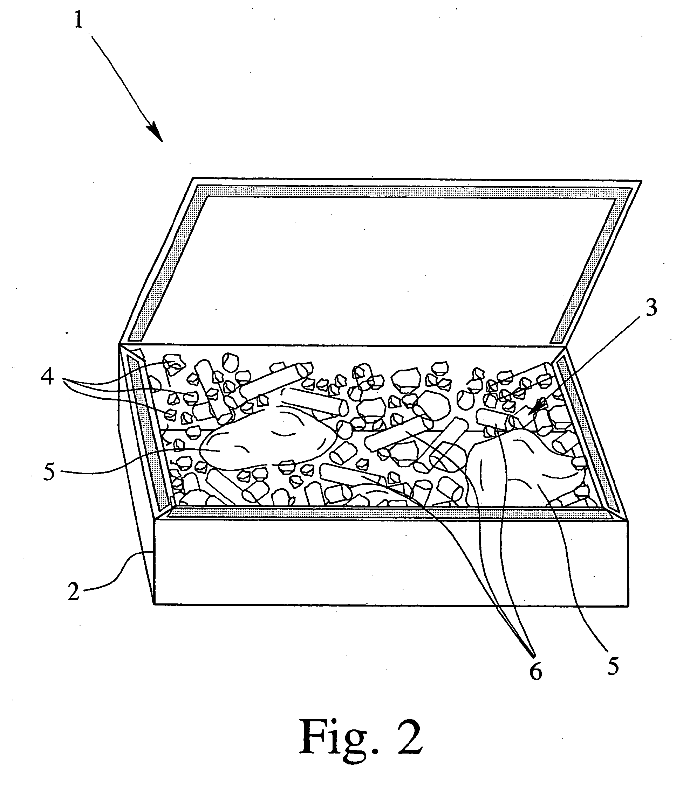

Die in Fig. 2 dargestellte Brennstoffeinheit 1 weist eine Hülle 2 aus Pappe auf, wobei die Hülle 2 im geöffneten, nicht gebrauchsfertigen Zustand dargestellt ist. Alle zuvor anhand von Brennstoffeinheiten 1 mit einer Hülle 2 aus einer Kunststoffolie in den Fig. 1 und 3 bis 5 beschriebenen Merkmale sind ohne weiteres auch auf die Brennstoffeinheit 1 in Fig. 2 mit einer Hülle 2 aus Pappe übertragbar.

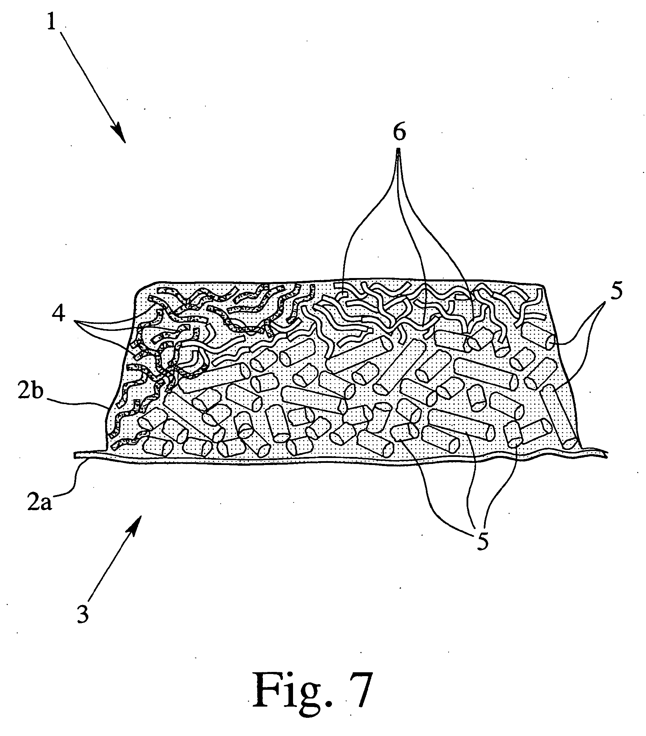

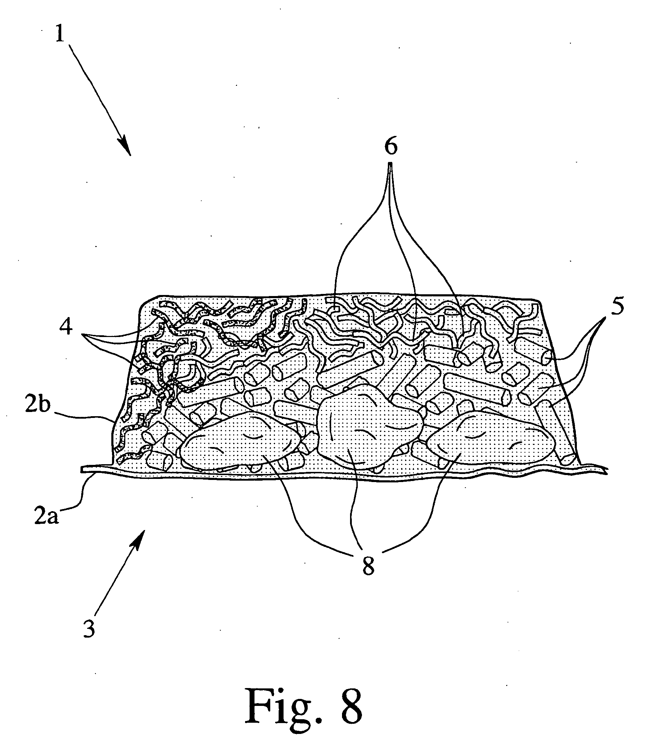

Die Fig. 7 und 8 zeigen Brennstoffeinheiten 1, die mit den zuvor erläuterten Brennstoffeinheiten 1 eine ebenfalls realisierte "Entzündungs-Kaskade" gemeinsam haben, die sich jedoch durch eine andere Materialwahl bei den Komponenten des Brennstoffinhalts 3 und eine besondere Anordnung dieser Komponenten von den zuvor dargestellten Ausführungsbeispielen unterscheiden. Bei den in den Fig. 7 und 8 dargestellten Brennstoffeinheiten sind die zweite Komponente 5 und die dritte Komponente 6 des Brennstoffinhalts 3 im wesentlichen horizontal geschichtet angeordnet. Selbstverständlich können sich die zweite Komponente 5 und die dritte Komponente 6 im Übergang der Schichten miteinander vermengen, jedoch ist die Schichtung im wesentlichen erfüllt. Bei den Ausführungsbeispielen gemäß den Fig. 7 und 8 ist die zweite Komponente 5 in einsatzfähiger Anordnung der Brennstoffeinheit 1 unter der dritten Komponente 6 angeordnet. Es hat sich herausgestellt, daß bei Anordnung der leichter entflammbaren Komponente über der schwerer entflammbaren Komponente eine noch zuverlässigere Umsetzung der "Entzündungs-Kaskade" gewährleistet ist.

Die in den Fig. 7 und 8 dargestellten Ausführungsbeispiele zeichnen sich ferner dadurch aus, daß die erste Komponente 4 - zumindest teilweise - wenigstens zwischen der dritten Komponente 6 des Brennstoffinhalts 3 und der brennbaren Hülle 2 angeordnet ist. Dadurch ist sichergestellt, daß die erste, besonders leicht entflammbare Komponente 4 des Brennstoffinhalts 3 sofort Feuer fangen kann, wenn auch die brennbare Hülle 2 entflammt worden ist, sei es durch direktes Applizieren einer externen Flamme oder durch eine - in den Fig. 7 und 8 nicht dargestellte - Zündhilfe. Die erste Komponente 4 muß dabei weder im gesamten Erstreckungsbereich der dritten Komponente 6 zwischen dieser dritten Komponente 6 und der brennbaren Hülle 2 vorgesehen sein noch muß die erste Komponente 4 eine vollständige Schicht ausbilden. Je nach Kombination von Materialien für die erste Komponente 4 und die dritte Komponente 6 des Brennstoffinhalts 3 kann es jedoch sinnvoll sein, daß die erste Komponente 4 die dritte Komponente 6 voll umfänglich überdeckt.

Bei dem Ausführungsbeispiel gemäß Fig. 7 besteht die erste Komponente 4 aus getränktem Papier, die zweite Komponente 5 aus Pellets und die dritte Komponente 6 aus Papier, vorzugsweise aus Schnipseln aus Filterpapier.

Bei dem Ausführungsbeispiel gemäß Fig. 8 ist eine vierte Komponente 8 des Brennstoffinhalts vorgesehen, wobei diese vierte Komponente 8 in einsatzfähiger Anordnung der Brennstoffeinheit 1 die unterste Schicht des Brennstoffinhalts 3 bildet. Die vierte Komponente 8 des Brennstoffinhalts 3 besteht in dem Ausführungsbeispiel gemäß Fig. 8 aus Briketts. Die erste Komponente 4, die zweite Komponente 5 und die dritte Komponente 6 sind in Fig. 8 genauso gewählt wie in Fig. 7. Bei den Ausführungsbeispielen gemäß den Fig. 7 und 8 ist die erste Komponente 4 des Brennstoffinhalts 3 so gefärbt, daß sie von den anderen Komponenten des Brennstoffinhalts 3 unterscheidbar ist. Dies hat insbesondere bei transparenten Hüllen 2 den Vorteil, daß für den Anwender unmittelbar ersichtlich ist, an welcher Stelle er die Hülle 2 entzünden muß, um die "Entzündungs-Kaskade" plangemäß in Gang zu setzen. Wenn für die erste Komponente 4 wachsgetränkte Papierschnipsel vorgesehen sind, ist diese Färbung besonders einfach durch die Verwendung von farbigem Wachs umsetzbar.

## Patentansprüche

1. Brennstoffeinheit (1) zur Vereinfachten Inbetriebnahme eines Grills oder eines Kamins, mit einer brennbaren Hülle (2) und einem brennbaren Brennstoffinhalt (3),
wobei der Brennstoffinhalt (3) aus mehreren brennbaren Komponenten besteht, wenigstens eine erste Komponente (4) leicht entflammbar ist, wenigstens eine zweite Komponente (5) schwerer entflammbar ist und im entzündeten Zustand als eine Hitze- und Glutquelle mit hoher Brenndauer dient, wobei der Brennstoffinhalt (3) wenigstens eine dritte Komponente (6) umfaßt, die eine mittlere Entflammbarkeit und Brenndauer aufweist, und
wobei weinigstens die zweite Komponente (5) und die dritte Komponente (6) des Brennstoffinhalts (3) im wesentlichen horizontal geschichtet angeordnet sind,
**dadurch gekennzeichnet,**
**daß** die zweite Komponente (5) in einsatzfähiger Anordnung der Brennstoffeinheit unter der dritten Komponente (6) angeordnet ist, und daß die Hülle (2) aus einer Kunststofffolie besteht.

2. Brennstoffeinheit nach Anspruch 1, **dadurch gekennzeichnet, daß** die erste Komponente (4) des Brennstoffinhalts (3) fest oder gelartig ist und insbesondere Bestandteile aus wenigstens einem von Kraftstoffen, Petroleum, Paraffin, Ölen, Fetten, Wachsen und/oder Alkohol aufweist.

3. Brennstoffeinheit nach Anspruch 1 oder 2, **dadurch gekennzeichnet, daß** die zweite Komponente (5) des Brennstoffinhalts (3) aus wenigstens einem Brikett besteht, wobei das Brikett insbesondere aus Stein- und/oder Braun- und/oder Holzkohle und/oder anderen gepreßten brennbaren Materialien besteht.

4. Brennstoffeinheit nach Anspruch 3, **dadurch gekennzeichnet, daß** das Brikett einen Überzug aufweist, insbesondere einen brandfördemden und/oder staubbindenden Überzug, vorzugsweise auf Wachsbasis.

5. Brennstoffeinheit nach einem der Ansprüche 1 bis 4, **dadurch gekennzeichnet, daß** die dritte Komponente (6) des Brennstoffinhalts (3) aus wenigstens einem Pellet besteht, vorzugsweise aus wenigstens einem Holzpellet, bevorzugt aus einer Mehrzahl von Pellets.

6. Brennstoffeinheit nach einem der Ansprüche 1 bis 4, **dadurch gekennzeichnet, daß** die dritte Komponente (6) des Brennstoffinhalts (3) im wesentlichen aus Papier besteht, insbesondere aus Filterpapier, bevorzugt aus gehäckselten Papierresten.

7. Brennstoffeinheit nach einem der Ansprüche 1 bis 6, **dadurch gekennzeichnet, daß** die Hülle (2) wenigstens eine erste, zumindest teilweise tiefgezogene Teilhüllse (2a) und wenigstens eine zweite Teilhülle (2b) umfaßt, wobei die erste Teilhülle (2a) und die zweite Teilhülle (2b) miteinander verbunden sind, insbesondere verklebt oder verschweißt sind.

8. Brennstoffeinheit nach einem der Ansprüche 1 bis 7, **dadurch gekennzeichnet, daß** die erste Komponente (4) des Brennstoffinhalts (3) - zumindest teilweise - als Belag auf der Innenseite der Hülle (2) vorgesehen ist.

9. Brennstoffeinheit nach Anspruch 8, **dadurch gekennzeichnet, daß** die zweite Komponente (5) und/oder die dritte Komponente (6) des Brennstoffinhalts (3) mittels der ersten Komponente (4) an der Innenseite der Hülle (2) fixiert ist.

10. Brennstoffeinheit nach einem der Ansprüche 1 bis 9, **dadurch gekennzeichnet, daß** die Hülle (2) im wesentlichen dampfdicht ist, insbesondere hinsichtlich flüchtiger Bestandteile der Komponenten des Brennstoffinhalts (3).

11. Brennstoffeinheit nach einem der Ansprüche 1 bis 10, **dadurch gekennzeichnet, daß** eine Zündhilfe (7) nach Art eines Dochts oder einer Lunte vorgesehen ist, mittels derer die Brennstoffeinheit (1) sicher entflammbar ist.

12. Brennstoffeinheit nach Anspruch 11, **dadurch gekennzeichnet, daß** die Zündhilfe (7) von außen an der brennbaren Hülle (2) befestigt ist.

13. Brennstoffeinheit nach einem der Ansprüche 11 oder 12, **dadurch gekennzeichnet, daß** die Zündhilfe (7) die brennbare Hülle (2) durchdringt, insbesondere an möglichen Verbindungsstellen (8) von Teilhüllen (2a, 2b).

14. Brennstoffeinheit nach einem der Ansprüche 11 bis 13, **dadurch gekennzeichnet, daß** die Zündhilfe (7) aus einem Faden oder einer Papierbahn besteht, der oder die insbesondere wachsgetränkt ist.

15. Brennstoffeinheit nach Anspruch 14, **dadurch gekennzeichnet, daß** die Papierbahn wenigstens einfach gefaltet ist, und der zusammengefaltete Teil außen an der Hülle befestigt und im Bedarfsfall entfaltbar ist.

16. Brennstoffeinheit nach einem der Ansprüche 11 bis 15, **dadurch gekennzeichnet, daß** die Zündhilfe (7) an einer Oberseite der Brennstoffeinheit befestigt ist.

17. Brennstoffeinheit nach einem der Ansprüche 1 oder 2 und gegebenenfalls nach einem der Ansprüche 6 bis 16, **dadurch gekennzeichnet, daß** die zweite Komponente (5) der Brennstoffinhalts (3) aus wenigstens einem Pellet, insbesondere aus wenigstens einem Holzpellet und die dritte Komponente (6) des Brennstoffinhalts (3) im wesentlichen aus Papier, insbesondere Filterpapier, vorzugsweise aus gehäckseltem Papier besteht.

18. Brennstoffeinheit nach einem der Ansprüche 1 bis 17, **dadurch gekennzeichnet, daß** die Brennstoffeinheit längserstreckt ist, insbesondere einen dreieckigen Querschnitt aufweist.

19. Brennstoffeinheit nach einem der Ansprüche 1 bis 18, **dadurch gekennzeichnet, daß** die erste Komponente (4) - zumindest teilweise - wenigstens zwischen der dritten Komponente (6) des Brennstoffinhalts (3) und der brennbaren Hülle (2) angeordnet ist.

20. Brennstoffeinheit nach einem der Ansprüche 1 bis 19, **dadurch gekennzeichnet, daß** eine vierte Komponente (8) des Brennstoffinhalts (3) vorgesehen ist, wobei die erste Komponente (4) vorzugsweise aus getränktem Papier, die zweite Komponente (5) vorzugsweise aus Pellets, die dritte Komponente (6) vorzugsweise aus Papier und die vierte Komponente (8) vorzugsweise aus wenigstens einem Brikett besteht.

21. Brennstoffeinheit nach Anspruch 20, **dadurch gekennzeichnet, daß** die vierte Komponente (8) des Brennstoffinhalts (3) in einsatzfähiger Anordnung der Brennstoffeinheit als die unterste Schicht vorgesehen ist.

22. Brennstoffeinheit nach einem der Ansprüche 1 bis 21, **dadurch gekennzeichnet, daß** die erste Komponente (4) des Brennstoffinhalts (3) so gefärbt ist, daß sie von den anderen Komponenten des Brennstoffinhalts (3) unterscheidbar ist.

## Claims

1. Fuel unit (1) for simplified lighting of a grill or a fireplace having a flammable casing (2) and flammable fuel content (3),
wherein the fuel content (3) consists of multiple flammable components, at least one first component (4) is readily flammable, at least a second component (5) is not as readily flammable and acts as a heat and ember source with a greater burning time in the lit state, wherein the fuel content (3) includes at least a third component (6), which has a mid-range flammability and burning time and
wherein at least the second component (5) and the third component (6) of the fuel content (3) are arranged in essentially horizontal layers,
**characterized in**
**that** the second component (5) is arranged under the third component (6) in an operational arrangement of the fuel unit and that the casing (2) consists of a plastic film.

2. Fuel unit according to claim 1, **characterized in that** the first component (4) of the fuel content (3) is solid or gel-like and has in particular elements of at least one of fuels, petroleum, paraffin, oils, fats, waxes and/or alcohols.

3. Fuel unit according to claim 1 or 2, **characterized in that** the second component (5) of the fuel content (3) consists of at least one briquette, wherein the briquette consists in particular of black coal and/or brown coal and/or charcoal and/or another pressed flammable material.

4. Fuel unit according to claim 3, **characterized in that** the briquette has a coating, in particular an fire-accelarating and/or dust-binding coating, preferably having a wax base.

5. Fuel unit according to any one of claims 1 to 4, **characterized in that** the third component (6) of the fuel content (3) consists of at least one pellet, particularly of at least one wood pellet, preferably of multiple pellets.

6. Fuel unit according to any one of claims 1 to 4, **characterized in that** the third component (6) of the fuel content (3) consists essentially of paper, particularly of filter paper, preferably of chopped paper offcut.

7. Fuel unit according to any one of claims 1 to 6, **characterized in that** the casing (2) includes at least a first, at least partially deep-drawn partial casing (2a) and at least a second partial casing (2b), wherein the first partial casing (2a) and the second partial casing (2b) are joined to one another, in particular are glued or fused together.

8. Fuel unit according to any one of claims 1 to 7, **characterized in that** the first component (4) of the fuel content (3) is provided - at least partially - as a film on the inside of the casing (2).

9. Fuel unit according to claim 8 **characterized in that** the second component (5) and/or the third component (6) of the fuel content (3) is attached to the inside of the casing (2) by means of the first component (4).

10. Fuel unit according to any one of claims 1 to 9, **characterized in that** the casing (2) is essentially steam-tight, in particular in view of volatile elements of the components of the fuel content (3).

11. Fuel unit according to any one of claims 1 to 10, **characterized in that** a lighting aid (7) is provided in the form of a wick or a fuse, by means of which the fuel content (3) can be reliably set into flame.

12. Fuel unit according to claim 11, **characterized in that** the lighting aid (7) is attached from the outside on the flammable casing (2).

13. Fuel unit according to any one of claims 11 or 12, **characterized in that** the lighting aid (7) penetrates the flammable casing (2), in particular at possible connecting points (8) of partial casings (2a, 2b).

14. Fuel unit according to any one of claims 11 to 13, **characterized in that** the lighting aid (7) consists of a thread or a strip of paper, which, in particular, has been impregnated with wax.

15. Fuel unit according to claim 14, **characterized in that** the strip of paper is folded at least once and the folded part is attached to the outside of the casing (2) and can be unfolded when necessary.

16. Fuel unit according to any one of claims 11 to 15, **characterized in that** the lighting aid (7) is attached to the topside of the fuel unit.

17. Fuel unit according to claim 1 or 2 and, if the case may be, according to any one of claims 6 to 16, **characterized in that** the second component (5) of the fuel content (3) consists of at least one pellet, in particular of at least one wood pellet and the third component (6) of the fuel content (3) consists essentially of paper, particularly filter paper, preferably of chopped paper.

18. Fuel unit according to any one of claims 1 to 17, **characterized in that** the fuel unit is elongate, in particular has a triangular cross-section.

19. Fuel unit according to any one of claims 1 to 18, **characterized in that** the first component (4) - at least partially - is arranged at least between the third component (6) of the fuel content (3) and the flammable casing (2).

20. Fuel unit according to any one of claims 1 to 19, **characterized in that** a fourth component (8) of the fuel content (3) is provided, wherein the first component (4) consists preferably of impregnated paper, the second component (5) preferably of pellets, the third component (6) preferably of paper and the fourth component (8) preferably of at least one briquette.

21. Fuel unit according to claim 20, **characterized in that** the fourth component (8) of the fuel content (3) is provided as the bottom-most layer in an operational arrangement of the fuel unit.

22. Fuel unit according to any one of claims 1 to 21, **characterized in that** the first component (4) of the fuel content (3) is colored so that it can be differentiated from the other components of the fuel content (3).

## Revendications

1. Unité de combustible (1) destinée à faciliter la mise en service d'un gril ou d'une cheminée et présentant une enveloppe combustible (2) et un contenu combustible (3),
le contenu combustible (3) étant constitué de plusieurs composants combustibles, au moins un premier composant (4) étant aisément inflammable, au moins un deuxième composant (5) étant plus difficilement inflammable et servant à l'état allumé de source de chaleur et d'incandescence à haute durée de combustion,
le contenu combustible (3) comprenant au moins un troisième composant (6) qui présente une inflammabilité moyenne et une durée moyenne de combustion,
au moins le deuxième composant (5) et le troisième composant (6) du contenu combustible (3) étant disposés en couches essentiellement horizontales,
**caractérisée en ce que**
lorsque l'unité de combustible est placée en position d'utilisation, le deuxième composant (5) est situé en dessous du troisième composant (6) et
**en ce que** l'enveloppe (2) est constituée d'une feuille de matière synthétique.

2. Unité de combustible selon la revendication 1, **caractérisée en ce que** le premier composant (4) du contenu combustible (3) est solide ou gélifié et est constitué de carburants, de pétrole, de paraffine, d'huiles, de graisses, de cires et/ou d'alcool.

3. Unité de combustible selon les revendications 1 ou 2, **caractérisée en ce que** le deuxième composant (5) du contenu combustible (3) est constitué d'au moins une briquette, la briquette étant constituée de charbon, de lignite et/ou de charbon de bois ou d'autres matériaux combustibles comprimés.

4. Unité de combustible selon la revendication 3, **caractérisée en ce que** la briquette présente un revêtement et en particulier un revêtement qui favorise la combustion et/ou retient les poussières, de préférence à base de cire.

5. Unité de combustible selon l'une des revendications 1 à 4, **caractérisée en ce que** le troisième composant (6) du contenu combustible (3) est constitué d'au moins une pastille et de préférence d'au moins une pastille de bois, mais de préférence de plusieurs pastilles.

6. Unité de combustible selon l'une des revendications 1 à 4, **caractérisée en ce que** le troisième composant (6) du contenu combustible (3) est essentiellement constitué de papier, en particulier de papier filtre et de préférence de résidus hachés de papier.

7. Unité de combustible selon l'une des revendications 1 à 6, **caractérisée en ce que** l'enveloppe (2) présente au moins une première enveloppe partielle (2a), partiellement emboutie et au moins une deuxième enveloppe partielle (2b), la première enveloppe partielle (2a) et la deuxième enveloppe partielle (2b) étant reliées l'une à l'autre, en particulier par collage ou par soudage.

8. Unité de combustible selon l'une des revendications 1 à 7, **caractérisée en ce que** le premier composant (4) du contenu combustible (3) est prévu au moins en partie comme revêtement du côté intérieur de l'enveloppe (2).

9. Unité de combustible selon la revendication 8, **caractérisée en ce que** le deuxième composant (5) et/ou le troisième composant (6) du contenu combustible (3) sont fixés sur le côté intérieur de l'enveloppe (2) au moyen du premier composant (4).

10. Unité de combustible selon l'une des revendications 1 à 9, **caractérisée en ce que** l'enveloppe (2) est essentiellement étanche aux vapeurs et en particulier vis-à-vis des composants volatils des éléments constitutifs du contenu combustible (3).

11. Unité de combustible selon l'une des revendications 1 à 10, **caractérisée en ce qu'**elle présente un accessoire d'allumage (7) de type mèche d'allumage qui permet d'enflammer de manière sûre l'unité de combustible (1).

12. Unité de combustible selon la revendication 11, **caractérisée en ce que** l'accessoire d'allumage (7) est fixé par l'extérieur sur l'enveloppe combustible (2).

13. Unité de combustible selon l'une des revendications 11 ou 12, **caractérisée en ce que** l'accessoire d'allumage (7) traverse l'enveloppe combustible (2), en particulier sur les éventuels emplacements (8) de liaison des enveloppes partielles (2a, 2b).

14. Unité de combustible selon l'une des revendications 11 à 13, **caractérisée en ce que** l'accessoire d'allumage (7) est constitué d'un fil ou d'une bande de papier, en particulier imprégnés de cire.

15. Unité de combustible selon la revendication 14, **caractérisée en ce que** la bande de papier est pliée au moins une fois, la partie rabattue étant fixée par l'extérieur sur l'enveloppe et pouvant éventuellement être dépliée.

16. Unité de combustible selon l'une des revendications 11 à 15, **caractérisée en ce que** l'accessoire d'allumage (7) est fixé sur le côté supérieur de l'unité de combustible.

17. Unité de combustible selon l'une des revendications 1 ou 2 et éventuellement selon l'une des revendications 6 à 16, **caractérisée en ce que** le deuxième composant (5) du contenu combustible (3) est constitué d'au moins une pastille, en particulier d'au moins une pastille de bois et **en ce que** le troisième composant (6) du contenu combustible (3) est essentiellement constitué de papier et en particulier de papier filtre, de préférence de papier haché.

18. Unité de combustible selon l'une des revendications 1 à 17, **caractérisée en ce que** l'unité de combustible est allongée et en particulier présente une section transversale triangulaire.

19. Unité de combustible selon l'une des revendications 1 à 18, **caractérisée en ce que** le premier composant (4) est disposé au moins en partie au moins entre le troisième composant (6) du contenu combustible (3) et l'enveloppe combustible (2).

20. Unité de combustible selon l'une des revendications 1 à 19, **caractérisée en ce qu'**un quatrième composant (8) est prévu dans le contenu combustible (3), le premier composant (4) étant de préférence constitué de papier imprégné, le deuxième composant (5) de préférence de pastilles, le troisième composant (6) de préférence de papier et le quatrième composant (8) de préférence d'au moins une briquette.

21. Unité de combustible selon la revendication 20, **caractérisée en ce que** le quatrième composant (8) du contenu combustible (3) est prévu comme couche inférieure lorsque l'unité de combustible est placée en position d'utilisation.

22. Unité de combustible selon l'une des revendications 1 à 21, **caractérisée en ce que** le premier composant (4) du contenu combustible (3) est coloré de manière à pouvoir être distingué des autres composants du contenu combustible (3).
